# FASCICULE DE BREVET EUROPEEN

(11) **EP 0 464 570 B1**
(45) Date de publication et mention de la délivrance du brevet: **06.09.1995**
(21) Numéro de dépôt: 91110396.8
(22) Date de dépôt: 24.06.1991
(51) Int. Cl.: G02B 6/44

(54) **Dispositif modulaire pour le stockage de réserves de support de transmission sur des liaisons, notamment à fibre optique**
Modulare Einrichtung zum Lagern von Vorräten an Übertragungsträgern in der Übertragungsstrecke, insbesondere für optische Fasern
Modular device for storing reserves of transmission means in a transmission line, notably fibre optic

(30) Priorité: 29.06.1990 FR 9008260
(43) Date de publication de la demande: 08.01.1992
(73) Titulaire: ALCATEL CIT, 75008 Paris (FR)
(72) Inventeur: Jamet, Daniel, Hameau de Villiers, F-91620 Nozay (FR); Guiberteau, Christian, F-91160 Longjumeau (FR)
(74) Mandataire: Weinmiller, Jürgen

(56) Documents cités:
- EP-A- 0 146 478
- FR-A- 2 515 466
- FR-A- 2 559 916
- FR-A- 2 586 822
- US-A- 3 405 296
- PATENT ABSTRACTS OF JAPAN, vol. 8, no. 1 (P-246)[1438], 6 janvier 1984; & JP-A-58 166 310 (FUJITSU) 01-10-1983

## Description

La présente invention concerne les équipements d'extrémité de liaisons par câbles électriques ou optiques, qui réalisent une interface entre ces câbles et des équipements de traitement de signaux transportés par ces câbles.

Dans ces équipements d'extrémité on effectue notamment une séparation des câbles d'arrivée en différents conducteurs élémentaires d'arrivée les constituant, et inversement un regroupement de différents conducteurs élémentaires de départ en câbles de départ.

La fragilité de ces conducteurs élémentaires, particulièrement sensible dans le cas où ces câbles sont des câbles optiques et où ces conducteurs élémentaires sont constitués par des fibres optiques, cas dans lequel on se placera à titre d'exemple dans ce qui suit, conduit à prévoir des portions de conducteurs en réserve dans ces équipements d'extrémité, ce qui pose le problème du stockage et de l'accès à ces réserves.

Dans ces équipements d'extrémité on effectue également, après séparation des câbles optiques en différentes fibres optiques élémentaires les constituant (avec éventuellement un niveau de séparation intermédiaire pour l'obtention d'éléments appelés joncs regroupant chacun plusieurs fibres optiques), un changement de support permettant de passer des supports ainsi obtenus, constitués chacun par une fibre optique munie d'une enveloppe protectrice, à des supports appelés dans ce qui suit jarretières optiques de raccordement, ou plus simplement jarretières et constitués chacun par une fibre optique munie d'une enveloppe protectrice renforcée par rapport à celle utilisée à l'intérieur des câbles, ce qui oblige à prévoir deux séries de réserves distinctes pour ces deux types de supports.

Ces deux types de supports sont raccordés entre eux par un jeu de connecteurs, ce qui permet en outre de modifier si nécessaire la répartition des jarretières en amont de l'équipement de traitement, suivant l'application à réaliser par cet équipement.

On connaît par la demande de brevet français n° 2 515 466, un dispositif pour le stockage de réserves sur un ensemble de fibres et de jarretières, et pour l'accès sélectif à ces réserves.

Ce dispositif comporte une série de tiroirs dans lesquels sont respectivement lovées ces fibres et ces jarretières pour constituer les réserves en question. Ces tiroirs sont disposés verticalement, perpendiculairement à la direction, horizontale, d'arrivée et de départ des fibres et des jarretières, et sont amovibles suivant une direction de déplacement orthogonale à ces directions horizontale et verticale. Il est par ailleurs précisé que les réserves de fibres sont fixées aux tiroirs à l'aide de crochets, et que les connecteurs raccordant les fibres et les jarretières sont disposés sur la face avant de ces tiroirs.

Ce dispositif présente donc un certain nombre d'inconvénients, parmi lesquels le fait de solliciter les deux types de supports (fibres et jarretières) pour une intervention sur un seul d'entre eux (les connecteurs étant en effet solidaires des tiroirs) ou encore le fait de provoquer, par un déplacement des tiroirs, un resserrement des rayons de courbure de ces supports, ou bien encore le fait de faire subir, hors interventions, plusieurs changements de direction successifs à ces supports.

Or on sait que dans le cas de supports de transmission à fibre optique, les contraintes mécaniques exercées sur ces supports sont à éviter le plus possible, car elles entraînent des risques de détériorations des fibres, et de dégradation sensible de la qualité des signaux transmis sur ces fibres, voire de cassures entraînant l'interruption de la liaison.

On connaît par ailleurs, par la demande de brevet français n°2 559 916, un boîtier utilisé pour constituer et stocker un tronçon de fibre optique en réserve. La partie centrale de ce boîtier est occupée par un tambour sur lequel est enroulée la longueur de fibre correspondant à la réserve souhaitée, et une ouverture est prévue dans deux des parois de ce boîtier pour permettre respectivement l'introduction de la fibre dans le boîtier et sa sortie de ce boîtier.

Cette demande de brevet décrit également une association de tels boîtiers pouvant pivoter individuellement autour d'un axe excentré pour être dégagés des boîtiers voisins et devenir ainsi accessibles.

Cette possibilité de pivotement, associée à un accès au boîtier en deux points seulement, correspondant aux ouvertures mentionnées ci-dessus, a cependant pour conséquence des contraintes mécaniques exercées sur les fibres en ces points d'accès au cours de ces mouvements, et donc des risques de détérioration, voire de cassure, de ces fibres, avec les mêmes conséquences que celles vues ci-dessus.

Le document FR-A-2 586 822 décrit (figures 6 et 7) un élément de stockage d'une réserve de support de transmission sur une liaison, notamment à fibre optique, et d'accès à cette réserve, comportant un volume de stockage d'au moins une spire dudit support. Le volume est délimité par des parois de deux catégories dites l'une périphérique, l'autre latérale. Chaque catégorie comporte elle-même deux types de parois dits intérieur et extérieur pour les parois périphériques, droit et gauche pour les parois latérales. Deux de ces parois présentent des interruptions, les opérations d'enroulement ou de déroulement dudit support s'effectuant par lesdites interruptions. Les deux parois présentant des interruptions sont mobiles l'une par rapport à l'autre. L'élément de stockage présente ainsi deux configurations : l'une permet de libérer les spires; l'autre permet d'emprisonner les spires.

Le document Patent Abstract of Japan vol 8 n°1 (p246) [1438] 6 janvier 1984, JP-A-58 166 310, décrit un système de stockage comportant une bobine rotative constituée de quatre crochets. Cette bobine est montée sur un panneau pouvant pivoter de 90° autour d'un arbre décalé par rapport à l'axe de rotation de la bobine.

La présente invention a pour but d'éviter les inconvénients des éléments de stockage selon l'art antérieur.

La présente invention a pour objet un élément de stockage d'une réserve de support de transmission sur une liaison, notamment à fibre optique, et d'accès à cette réserve; cet élément comportant un volume de stockage d'au moins une spire dudit support; ledit volume étant délimité par des parois de deux catégories dites l'une périphérique, l'autre latérale; chaque catégorie comportant elle-même deux types de parois dits intérieur et extérieur pour les parois périphériques, droit et gauche pour les parois latérales; deux au moins de ces parois présentent des interruptions; les espacements entre portions adjacentes de volume de stockage et/ou les contours des portions de parois interrompus étant déterminés de façon à minimiser les contraintes mécaniques exercées sur ledit support lors de son enroulement ou de son déroulement à travers lesdites interruptions;
caractérisé en ce que, dans le cas où toutes ces parois présentent des interruptions, deux portions de parois de catégories différentes, qui délimitent une portion de volume de stockage et dont le type alterne, pour chaque catégorie, d'une portion de volume de stockage à l'autre, sont toujours présentes simultanément; chaque portion de volume de stockage, ou une portion de volume de stockage sur deux, pouvant en outre être délimitée également par une troisième portion de paroi, suivant que deux ou une des quatre parois ne présente pas d'interruptions.

Suivant une autre caractéristique de l'invention, les contours des portions de parois périphériques sont déterminés de manière que la longueur des arcs de courbe formés par les intersections des portions de parois périphériques avec les portions de parois latérales présentes simultanément soit supérieure à la longueur des arcs de courbe formés par les intersections de ces portions de parois périphériques avec tout plan orthogonal à l'axe d'enroulement et coupant ces portions.

Suivant une autre caractéristique de l'invention, ce volume de stockage est monté mobile autour d'un axe de rotation parallèle à l'axe d'enroulement du support.

La présente invention a également pour objet un module pour le stockage de réserves de supports de transmission sur un ensemble de liaisons, notamment à fibre optique, et pour l'accès sélectif à ces réserves, comportant une association de tels éléments, et un équipement d'extrémité de câbles, notamment optiques, comportant une association de tels modules, permettant d'éviter les inconvénients précités.

Le module de stockage, selon l'invention, de réserves de supports de transmission sur un ensemble de liaisons, notamment à fibre optique, et d'accès sélectif à ces réserves, est essentiellement caractérisé en ce qu'il comporte un ensemble d'éléments de stockage tels que définis ci-dessus, montés mobiles autour d'un axe de rotation commun.

La présente invention a aussi pour objet un équipement d'extrémité de câbles, notamment optiques, assurant le raccordement de supports de transmission d'un premier type, constitués par les conducteurs élémentaires, notamment des fibres optiques, constitutifs de ces câbles, à des supports de transmission d'un deuxième type, notamment des jarretières optiques de raccordement, avec constitution de réserves de chacun de ces supports, essentiellement caractérisé en ce qu'il comporte au moins un premier module de stockage tel que défini ci-dessus, pour la constitution de réserves de supports de transmission du premier type et pour l'accès sélectif à ces réserves, et au moins un deuxième module de stockage tel que défini ci-dessus, pour la constitution de réserves sur les supports de transmission du deuxième type et pour l'accès sélectif à ces réserves.

D'autres objets et caractéristiques de la présente invention apparaîtront à la lecture de la description suivante d'exemples de réalisation, faite en relation avec les dessins ci-annexés dans lesquels :
- la figure 1 est une vue en perspective d'un élément de stockage suivant l'invention.
- La figure 2 est une vue en perspective d'un élément utilisable dans un élément de stockage suivant l'invention.
- La figure 3 est une vue en perspective d'un module de stockage suivant l'invention.
- la figure 4 est une vue en perspective d'un équipement d'extrémité de câbles optiques suivant l'invention.
- la figure 5 est une vue de côté de l'équipement représenté sur la figure 4.
- la figure 6 est une vue de face de l'équipement représenté sur la figure 4.

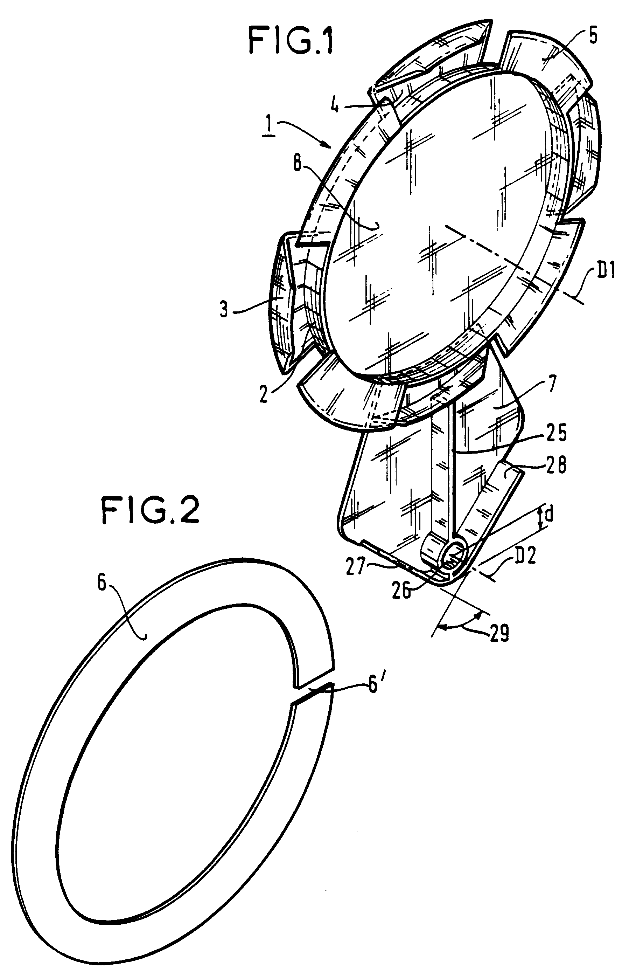

Dans l'exemple de réalisation illustré sur la figure 1, l'élément de stockage 1 suivant l'invention comporte un volume de stockage en forme d'anneau cylindrique creux, apte à stocker au moins une spire d'un support de transmission, non représenté sur cette figure, ladite spire étant enroulée dans ledit anneau autour de l'axe D1 de cet anneau cylindrique, dit axe d'enroulement.

Ce volume est délimité par une première paroi cylindrique, dite intérieure, 2, par une deuxième paroi cylindrique, dite extérieure, 3, et par deux parois latérales planes 4 et 5, en forme d'anneau, dites l'une, 4, gauche, l'autre, 5, droite, et est découpé en portions de volume de stockage dont une sur deux est en l'occurrence délimitée par une portion de paroi cylindrique extérieure, par une portion de paroi latérale gauche et par la paroi cylindrique intérieure, et une sur deux est délimitée par une portion de paroi latérale droite et par la paroi cylindrique intérieure.

On notera que dans cet exemple le rôle des parois droite et gauche pourrait être inversé.

Dans l'exemple illustré sur la figure 1, le nombre de portions de volume de stockage est égal à huit. On notera qu' un accroissement de ce nombre améliorerait le maintien du support, une fois enroulé dans ce volume, mais pourrait à l'inverse accroître le risque d'exposition de ce support à des contraintes mécaniques, lors de son enroulement ou de son déroulement, à la transition entre portions interrompues et non interrompues des parois.

Le contour des portions non interrompues de la paroi 3 est cependant avantageusement déterminé de manière à réduire le plus possible ces contraintes, grâce à un choix judicieux des angles de découpe de ce contour.

Dans l'exemple illustré sur la figure 1, ce contour a ainsi, vu de dessus, une forme trapézoïdale de préférence à une forme rectangulaire, la plus petite des bases de ce trapèze étant, en l'occurrence, localisée du côté de la paroi 5 et la plus grande de ces bases du côté de la paroi 4.

Plus généralement, le contour des portions non interrompues de la paroi 3 serait déterminé de telle sorte que la longueur des arcs de courbe formés par les intersections de ces portions avec les portions de parois latérales 4 présentes simultanément soit supérieure à la longueur des arcs de courbe formés par les intersections de ces portions de paroi 3 avec tout plan orthogonal à l'axe d'enroulement D1 et coupant ces portions.

Les contraintes exercées sur le support lors de son enroulement ou de son déroulement pourraient également être réduites en prévoyant, contrairement à l'exemple illustré sur la figure 1, un espacement entre portions de parois consécutives, ou en cumulant un tel espacement avec un contour de portions de parois tel que décrit ci-dessus.

Par ailleurs, pour améliorer le maintien des spires du support, une fois enroulé, dans le volume de stockage, cet élément de stockage peut être complété par une rondelle souple 6, telle que représentée sur la figure 2, et permettant, une fois insérée dans cet élément de stockage, plaquée contre l'une des parois 4 et 5, de remplacer les portions interrompues de cette paroi par des portions non interrompues, mais souples.

Pour faciliter sa mise en place, cette rondelle présente une fente 6′ permettant, après introduction de l'une des extrémités de cette rondelle par l'une desdites interruptions, d'introduire la totalité de cette rondelle par simple glissement de celle-ci à l'intérieur du volume considéré.

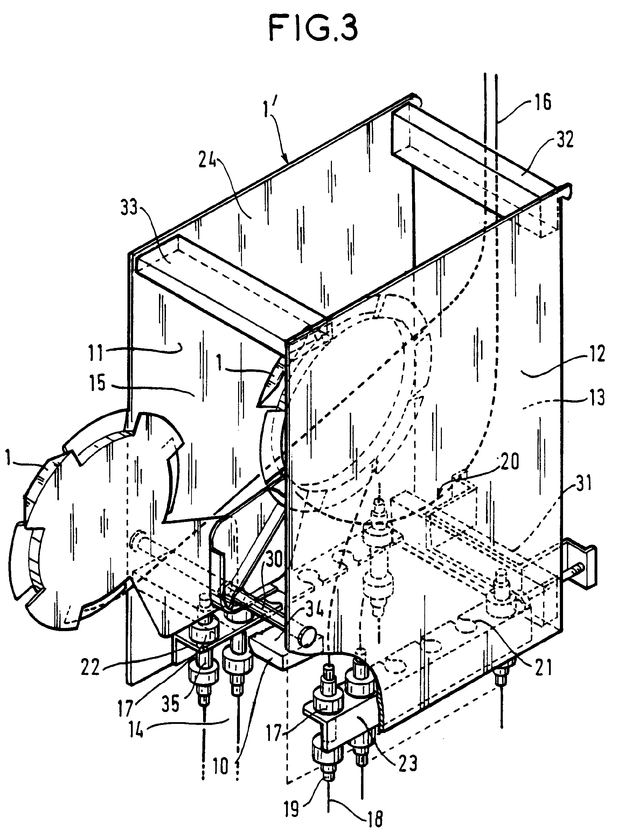

Lorsque des réserves doivent être constituées simultanément sur plusieurs liaisons, et comme représenté sur la figure 3, on juxtapose une série de tels éléments de stockage, en nombre égal au nombre de supports considérés, pour constituer un module de stockage 1′.

Pour autoriser alors l'accès individuel à chacune des réserves ainsi constituées, chaque volume de stockage est, comme représenté sur la figure 1, monté solidaire d'une pièce 7 ayant sensiblement la forme d'un losange tronqué selon une coupe arrondie suivant un rayon identique à celui extérieur dudit volume. Sont constituées ainsi deux surfaces complémentaires aptes à être reliées l'une à l'autre. On obtient ainsi un ensemble ayant une forme générale proche de celle d'un hochet dont le manche est constitué de ladite pièce 7.

En considérant selon la figure 1 que le "hochet" est en équilibre selon une position verticale sur l'extrémité inférieure de son manche, il est adjoint à celui-ci dans un plan orthogonal, afin de le rigidifier, une pièce de renfort 25 de largeur sensiblement égale à celle de la paroi cylindrique intérieure 2 du volume de stockage et montée verticalement selon une ligne reliant le centre de l'élément de stockage au sommet de l'angle 29 du losange opposé à la partie tronquée. Cette pièce de renfort est évasée à sa partie inférieure, symétriquement par rapport au sommet de l'angle 29, pour permettre l'aménagement d'un trou cylindrique 26 d'axe D2 parallèle à l'axe d'enroulement D1.

Les côtés de l'angle 29 sont constitués par deux parois 27 et 28 de largeur égale à celle de la pièce de renfort et montées sur le même plan, elles épousent exactement le contour de l'angle. Ces deux parois constituent deux méplats pour servir d'appui stable à l'ensemble comme il sera vu ci-dessous.

La pièce 7 ainsi constituée va permettre la rotation de chaque volume de stockage autour de l'axe D2.

Pour faciliter les manipulations de ces éléments de stockage, le volume cylindrique intérieur délimité par la paroi 2, ou l'une seulement des bases de ce volume, peut en outre être plein, comme illustré par la pièce 8 sur la figure 1.

On notera qu'en pratique l'ensemble qui vient d'être décrit, en regard de la figure 1, est réalisé avantageusement en une seule pièce moulée par injection.

D'autres formes de volumes de stockage que celle illustrée sur la figure 1 seraient possibles, de même que d'autres modes de délimitation des portions de volume de stockage.

Ainsi la paroi périphérique intérieure 2 pourrait également être interrompue. Dans le cas extrême où toutes les parois présenteraient ainsi des interruptions, ces interruptions devraient être déterminées de telle sorte que soient toujours présents simultanément deux portions de parois de catégories (périphérique ou latérale) différentes, dont le type (intérieur ou extérieur, droit ou gauche) alterne, pour chaque catégorie, d'une portion de volume de stockage à l'autre, en vue de permettre l'enroulement ou le déroulement du support par ces interruptions, tout en maintenant ledit support dans le volume de stockage, une fois enroulé.

A partir de cette configuration extrême, d'autres configurations pourraient être obtenues en prévoyant une des quatre parois non interrompues ; un exemple d'une telle configuration est celui illustré sur la figure 1.

D'autres configurations pourraient ensuite être obtenues en prévoyant deux parois, de catégories différentes, non interrompues. Ainsi, à partir de l'exemple illustré sur la figure 1, il pourrait être envisagé de faire l'une des parois latérales continue.

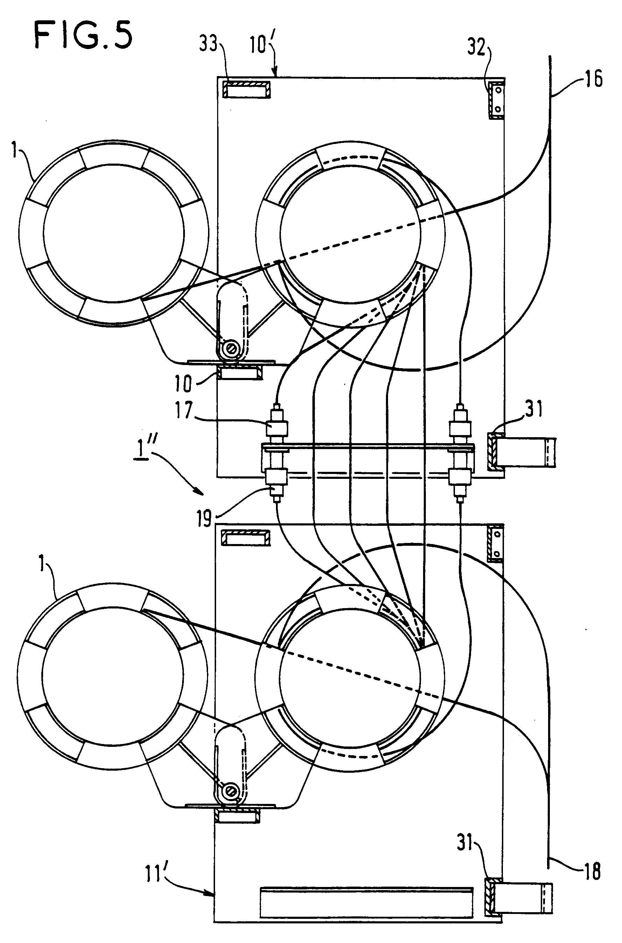

Comme représenté sur la figure 3, le module 1′ se présente sous une forme sensiblement parallélépipédique, il est constitué notamment de quatre montants 10, 31, 32, 33 montés en entretoise entre deux parois latérales 11 et 12 et complété par un dispositif, non référencé, de fixation sur un bâti. Les deux montants situés près de la face avant 15 sont montés orthogonalement par rapport aux deux montants situés près de la face arrière 13 (voir figure 5). L'axe D2 est porté par une tige cylindrique 30 supportée par les faces latérales 11, 12 du module 1′.

Le montant 10 est fixé de façon à ce que sa partie plane 34 se trouve sensiblement à une distance "d" en dessous de l'axe D2, correspondant à celle existant entre l'axe D2 et le sommet arrondi de l'angle 29 (voir figure 1)

La juxtaposition des éléments de stockage est réalisée en enfilant sur la tige 30 lesdits éléments par l'intermédiaire de leur trou 26.

La pièce 7 a donc, comme vin ci-dessus, à sa partie terminale venant en contact avec le montant 10, une forme en V dans une coupe suivant un plan orthogonal à la direction des axes D1 et D2, conférant ainsi à chaque élément de stockage deux positions, en butée, stables, par l'appui des parois 27, 28 sur la partie plane 34 du montant 10, comme illustrées sur la figure 3, correspondant l'une à une intervention sur cet élément pour accéder à la réserve correspondante, et l'autre à une absence d'intervention. On remarquera qu'avantageusement les branches du V sont ouvertes selon un angle à 90°.

Les faces arrière 13, inférieure 14, supérieure 24, et avant 15 de ce module de forme sensiblement parallélépipédique sont ouvertes pour permettre d'une part l'accès desdites liaisons aux éléments de stockage correspondant de ce module, pour la première de ces faces, et d'autre part le basculement de ces éléments de stockage, pour la dernière de ces faces. La face avant 15 peut par ailleurs être munie d'un couvercle amovible, non représenté sur cette figure. Les faces inférieure 14 et supérieure 24 ouvertes permettent le passage de liaisons par fibre ou jarretière d'un module à l'autre lorsque ceux-ci sont superposés.

Comme illustré sur la figure 3, les liaisons telles que 16 sur lesquelles sont constituées ces réserves sont, au moins pour un de leurs accès aux éléments de stockage, correspondant à l'accès par la face arrière de ce module, disposées dans un plan orthogonal aux axes D1 et D2 de ces éléments de stockage.

Pour ce qui est de leur autre accès à ces éléments de stockage, correspondant à un accès par la face inférieure de ce module, la disposition de ces liaisons est déterminée par les emplacements de demi-connecteurs tels que 17 permettant le raccordement des supports constitutifs de ces liaisons à d'autres liaisons telles que 18 équipées de demi-connecteurs complémentaires tels que 19 et sur lesquels peuvent à nouveau être prévues des réserves.

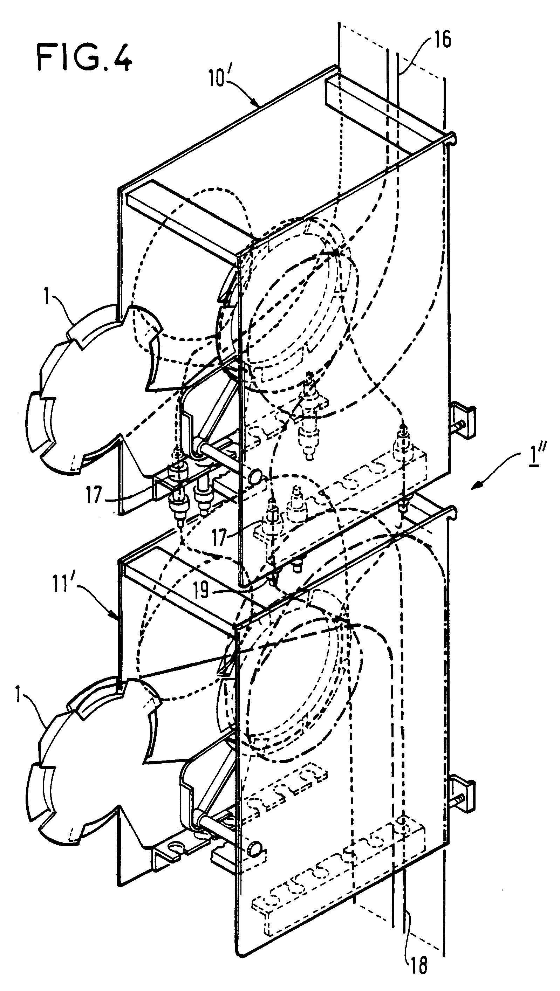

La disposition des liaisons entre éléments de stockage et demi-connecteurs sera mieux vue sur les figures 4 et 5 montrant l'application de ces modules de stockage à un équipement d'extrémité de câble optique.

Les mouvements de rotation des éléments de stockage sont par ailleurs autorisés par la prévision d'une certaine marge de support sur ces liaisons de part et d'autre de ces éléments de stockage, comme illustré en 20 sur la figure 3.

Dans l'exemple illustré sur la figure 3, des logements tels que 21 sont prévus pour les supports 35 de demi-connecteurs tels que 17, sur la face inférieure du parallélépipède, en l'occurrence sur deux montants 22, 23 orientés perpendiculairement à la direction des axes D1 et D2, et fixé respectivement au bas des faces latérales 11 et 12, cette disposition permettant de réduire l'encombrement de ce module suivant la direction de ces axes tout en laissant à l'exploitant une bonne accessibilité aux demi-connecteurs.

Dans cet exemple, un module de stockage pouvant contenir douze éléments de stockage, chacun de ces montants comporte ainsi six logements.

Pour accèder à l'une des réserves, le support, par exemple une fibre, étant alors supposé déconnecté du demi-connecteur tel que 17 correspondant, on fait basculer l'élément de stockage concerné comme indiqué sur la figure 3 et on déroule la fibre sur la longueur voulue.

Au cours de ces opérations, la fibre reste toujours, de part et d'autre de l'élément de stockage, dans un plan perpendiculaire aux axes D1 et D2. De cette façon, ainsi que par la multiplicité d'accès de cette fibre à cet élément de stockage, on évite d'exposer la fibre à des contraintes mécaniques au cours de cette intervention.

La quantité de réserve utilisée peut correspondre soit à plusieurs spires, soit à une seule spire, soit à une partie seulement d'une spire, au cas où cette partie est, avec la marge prévue entre l'élément de stockage correspondant et le demi-connecteur correspondant, suffisante pour permettre de reconnecter la fibre à ce demi-connecteur sans soumettre la fibre à de trop fortes tensions mécaniques.

L'utilisation d'une partie seulement d'une spire est également rendue possible par la multiplicité d'accès à l'élément de stockage suivant l'invention, permettant à la fibre de quitter sa réserve en un point quelconque sans pour cela l'exposer à des risques de contraintes mécaniques.

On décrit maintenant, en relation avec les figures 4, 5, 6, un équipement 1˝ d'extrémité de câble optique comportant un ensemble de modules de stockage tels qu'illustrés sur la figure 3, en l'occurrence deux modules 10′ et 11′, permettant l'un de constituer des réserves de fibres optiques telles que 16, et l'autre des réserves de jarretières optiques de raccordement telles que 18.

Ces modules sont situés l'un au-dessus de l'autre, le module 10′ étant en l'occurrence au-dessus du module 11′. Le nombre de modules ainsi juxtaposés les uns au-dessus des autres n'est cependant pas limité à deux. De même plusieurs ensembles de modules ainsi juxtaposés pourraient être disposés les uns à côté des autres.

Comme précédemment, chacune des liaisons, par fibre ou par jarretière, accède à cet équipement en étant située dans un plan perpendiculaire aux axes d'enroulement et de rotation de ces deux modules.

De même, les fibres et les jarretières accèdent à cet équipement par la face arrière de ces modules, leur face avant permettant l'accès, par l'opérateur, aux éléments de stockage, par basculement de ceux-ci. Le sens d'enroulement est cependant inversé d'un module à l'autre si l'on prend comme point de début de l'enroulement l'arrivée des fibres, d'une part, et le départ des jarretières d'autre part, par la face arrière de leur module respectif.

Le raccordement des jarretières aux fibres se fait au moyen de demi-connecteurs complémentaires tels que 17 et 19 raccordés à des supports 35 mis en place dans les logements 21 prévus à la face inférieure du module 10′.

L'accès aux réserves de jarretières se fait de façon analogue à ce qui a été décrit ci-dessus pour les fibres, et avec les mêmes avantages.

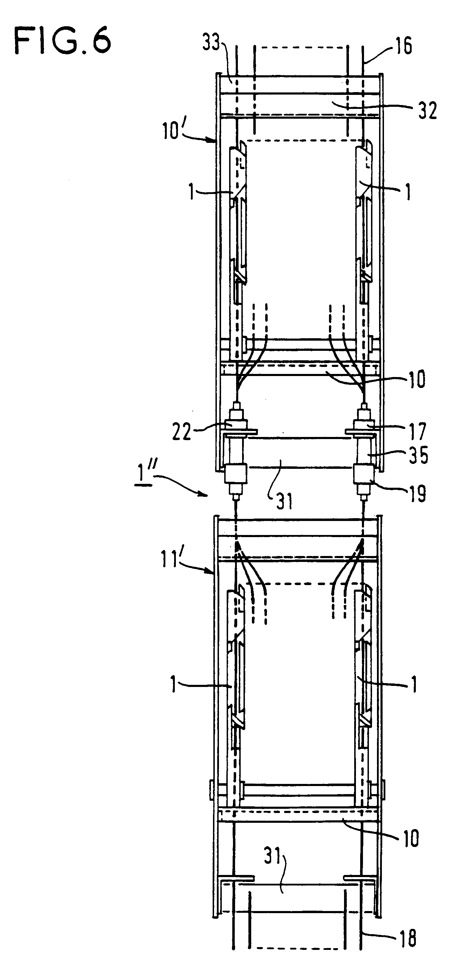

Les figures 5 et 6 montrant respectivement cet équipement de côté et de face, font apparaître que l'agencement des liaisons entre éléments de stockage et demi-connecteurs de raccordement est tel que les marges de support de transmission prévues entre ces éléments de stockage et ces demi-connecteurs de raccordement sont plus grandes pour ceux de ces demi-connecteurs situés le plus près de la face arrière des modules et pour ceux de ces éléments de stockage situés le plus loin des faces latérales de ces modules.

## Revendications

1. Elément de stockage (1) d'une réserve de support (16) de transmission sur une liaison, notamment à fibre optique, et d'accès à cette réserve; élément comportant un volume de stockage d'au moins une spire dudit support; ledit volume étant délimité par des parois (2, 3, 4, 5) de deux catégories dites l'une (2, 3) périphérique, l'autre (4, 5) latérale; chaque catégorie comportant elle-même deux types de parois dits intérieur (2) et extérieur (3) pour les parois périphériques, droit (5) et gauche (4) pour les parois latérales; deux au moins de ces parois (2, 3, 4, 5) présentant des interruptions; et les espacements entre portions adjacentes de volume de stockage et/ou les contours des portions de parois interrompues (3, 4, 5) étant déterminés de façon à minimiser les contraintes mécaniques exercées sur ledit support lors de son enroulement ou de son déroulement à travers lesdites interruptions;
caractérisé en ce que, dans le cas où toutes ces parois présentent des interruptions, deux portions de parois de catégories différentes qui délimitent une portion de volume de stockage et dont le type alterne, pour chaque catégorie, d'une portion de volume de stockage à l'autre, sont toujours présentes simultanément; chaque portion de volume de stockage, ou une portion de volume de stockage sur deux, pouvant en outre être délimitée également par une troisième portion de paroi, suivant que deux ou une des quatre parois (2, 3, 4, 5) ne présente pas d'interruptions.

2. Elément selon la revendication 1, caractérisé en ce que les contours des portions de parois périphériques (2, 3) sont déterminés de manière que la longueur des arcs de courbe formés par les intersections de ces portions de parois périphériques avec les portions de parois latérales (4, 5) présentes simultanément, soit supérieure à la longueur des arcs de courbe formés par les intersections de ces portions de parois périphériques avec tout plan orthogonal à l'axe d'enroulement (D1) et coupant ces portions.

3. Elément selon l'une des revendications 1 et 2, caractérisé en ce qu'il est monté mobile autour d'un axe de rotation (D2) parallèle à l'axe d'enroulement (D1).

4. Elément selon l'une des revendications 1 à 3, caractérisé en ce que ladite liaison (16) est, au moins pour l'un de ses accès audit volume de stockage, disposée dans un plan perpendiculaire à l'axe d'enroulement et coupant ce volume.

5. Elément selon la revendication 3, caractérisé en ce que ledit volume de stockage est solidaire d'une pièce (7) permettant sa rotation autour dudit axe de rotation (D2).

6. Elément selon la revendication 5, caractérisé en ce que ledit axe de rotation étant supporté par une tige cylindrique (30), la partie de ladite pièce (7) permettant la rotation dudit volume de stockage autour dudit axe de rotation a, dans un plan orthogonal à cet axe, un contour en forme de "V" conférant audit élément de stockage deux positions stables dans sa rotation autour dudit axe.

7. Elément selon l'une des revendications 1 à 6, caractérisé en ce que, ledit volume de stockage étant formé par un anneau cylindrique creux délimité par une paroi périphérique extérieure cylindrique (3), une paroi périphérique intérieure cylindrique (2) et deux parois latérales planes en forme d'anneau (4, 5), la paroi périphérique intérieure (2) ne présente pas d'interruptions et la paroi périphérique extérieure (3) et les parois planes en forme d'anneau (4, 5) présentent des interruptions de telle sorte qu'une portion de volume de stockage sur deux soit délimitée par la paroi périphérique intérieure (2), par une portion de paroi périphérique extérieure (3) et par une portion de paroi latérale gauche ou droite (4, 5) et une portion de volume de stockage sur deux soit délimitée par la paroi périphérique intérieure (2) et par une portion de paroi latérale droite ou gauche (4, 5).

8. Elément selon la revendication 7, caractérisé en ce que le contour des portions de parois périphériques extérieures (3) a, vu de dessus, une forme trapézoïdale.

9. Elément selon l'une des revendications 7 et 8, caractérisé en ce qu'il comporte en outre une rondelle souple (6), plaquée contre l'une des parois planes en forme d'anneau (4, 5).

10. Elément selon la revendication 9, caractérisé en ce que ladite rondelle (6) est munie d'une fente (6′) permettant son introduction dans ledit volume.

11. Module de stockage (1′) de réserves de supports de transmission sur un ensemble de liaisons (16), notamment à fibre optique, et d'accès sélectif à ces réserves, caractérisé en ce qu'il comporte un ensemble d'éléments (1) suivant l'une des revendications 3 à 10, montés mobiles autour d'un axe de rotation commun (D2).

12. Module selon la revendication 11, caractérisé en ce qu'il a une forme sensiblement parallélépipédique comportant une face avant (15) une face arrière (13), une face supérieure (24), une face inférieure (14) et deux faces latérales (11, 12), ledit axe de rotation (D2) étant supporté par lesdites faces latérales.

13. Module selon la revendication 12, caractérisé en ce que lesdites liaisons (16) accédent auxdits éléments de stockage par lesdites faces arrière, inférieure et supérieure.

14. Module selon la revendication 13, caractérisé en ce que ladite face inférieure est munie d'un ensemble de logements (21) destinés à recevoir un ensemble de supports (35) de demi-connecteurs (17, 19) de raccordement de ces liaisons (16) à d'autres liaisons (18).

15. Module selon la revendication 14, caractérisé en ce que lesdits logements (21) sont répartis sur les côtés de ladite face inférieure perpendiculaires à la direction de l'axe d'enroulement (D1).

16. Equipement (1˝) d'extrémité de câbles, notamment optiques, équipement assurant le raccordement de supports de transmission d'un premier type (16), constitués par les conducteurs élémentaires, notamment des fibres optiques, constitutifs de ces câbles, à des supports de transmission d'un deuxième type (18), notamment des jarretières optiques de raccordement, avec constitution de réserves de chacun de ces supports, caractérisé en ce qu'il comporte au moins un premier module (10′) suivant l'une des revendications 11 à 15, pour la constitution de réserves sur les supports de transmission du premier type (16) et pour l'accès sélectif à ces réserves, et au moins un deuxième module (11′) suivant l'une des revendications 11 à 15 pour la constitution de réserves sur les supports de transmission du deuxième type (18) et pour l'accès sélectif à ces réserves.

## Patentansprüche

1. Element (1) zur Lagerung einer Reservelänge eines Übertragungsträgers (16) auf einer Verbindung insbesondere mit Lichtleitfasern, und zum Zugang zu dieser Reservelänge, wobei dieses Element ein Lagervolumen für mindestens eine Windung dieses Trägers aufweist, das von Wänden (2, 3, 4, 5) zweier Kategorien begrenzt wird, nämlich einer peripheren (2, 3) und einer seitlichen (4, 5), wobei jede Kategorie selbst zwei Arten von Wänden aufweist, nämlich innere (2) und äußere (3) für die peripheren Wände und rechte (5) und linke (4) für die Seitenwände, wobei mindestens zwei dieser Wände (2, 3, 4, 5) Unterbrechungen aufweisen, und wobei die Abstände zwischen benachbarten Abschnitten von Lagervolumen und/oder die Umrisse der unterbrochenen Wandteile (3, 4, 5) derart bestimmt sind, daß die auf den Träger während seines Aufrollens oder seines Abrollens durch diese Unterbrechungen ausgeübten mechanischen Beanspruchungen minimiert werden, dadurch gekennzeichnet, daß, wenn alle diese Wände Unterbrechungen aufweisen, zwei Wandteile unterschiedlicher Kategorie, die einen Abschnitt des Lagervolumens begrenzen und deren Art für jede Kategorie von einem Volumenabschnitt zum anderen variiert, immer gleichzeitig vorhanden sind, wobei jeder Abschnitt des Lagervolumens oder jeder zweite Abschnitt des Lagervolumens außerdem von einem dritten Wandteil begrenzt sein kann, je nachdem, ob eine oder zwei der vier Wände (2, 3, 4, 5) keine Unterbrechung aufweisen.

2. Element nach Anspruch 1, dadurch gekennzeichnet, daß die Umrisse der peripheren Wandteile (2, 3) derart bestimmt sind, daß die Länge der von den Überlappungen der peripheren Wandteile mit den gleichzeitig vorhandenen Seitenwandteilen (4, 5) gebildeten Kurvenbögen größer ist als die Länge der Kurvenbögen, die von den Überlappungen dieser peripheren Wandteile mit jeder zur Wickelachse (d1) orthogonalen Ebene gebildet werden und diese Teile schneiden.

3. Element nach einem der Ansprüche 1 und 2, dadurch gekennzeichnet, daß es um eine Drehachse (D2) parallel zur Wickelachse (D1) beweglich montiert ist.

4. Element nach einem der Ansprüche 1 bis 3, dadurch gekennzeichnet, daß die Verbindung (16) zumindest für einen ihrer Zugänge zum Lagervolumen in einer dieses Volumen schneidenden Ebene und senkrecht zur Wickelachse angeordneten Ebene liegt.

5. Element nach Anspruch 3, dadurch gekennzeichnet, daß dieses Lagervolumen fest mit einem Teil (7) verbunden ist, das seine Drehung um die Drehachse (D2) erlaubt.

6. Element nach Anspruch 5, dadurch gekennzeichnet, daß die Drehachse von einem zylindrischen Stab (30) getragen wird und der Bereich des Teils (7), der die Drehung des Lagervolumens um die Drehachse erlaubt, in einer Ebene senkrecht zu dieser Achse einen V-förmigen Umfang hat, der dem Lagerelement zwei stabile Endstellungen in seiner Drehung um diese Achse verleiht.

7. Element nach einem der Ansprüche 1 bis 6, dadurch gekennzeichnet, daß das Lagervolumen von einem hohlen zylindrischen Ring gebildet wird, der von einer zylindrischen peripheren Außenwand (3), einer zylindrischen peripheren Innenwand (2) und zwei seitlichen, flachen, ringförmigen Wänden (4, 5) begrenzt wird, wobei die innere periphere Wand (2) keine Unterbrechungen aufweist, während die periphere Außenwand (3) und die flachen ringförmigen Wände (4, 5) Unterbrechungen aufweisen, so daß jeder zweite Abschnitt des Lagervolumens von der peripheren Innenwand (2), einem peripheren Außenwandteil (3) und einem linken oder rechten Seitenwandteil (4, 5) begrenzt wird, während ein Abschnitt von zweien des Lagervolumens nur von der peripheren Innenwand (2) und einem rechten oder linken Seitenwandteil (4, 5) begrenzt wird.

8. Element nach Anspruch 7, dadurch gekennzeichnet, daß der Umriß der peripheren Außenwandteile (3) von oben gesehen eine Trapezform hat.

9. Element nach einem der Ansprüche 7 und 8, dadurch gekennzeichnet, daß es außerdem eine biegsame Scheibe (6) aufweist, die gegen eine der ebenen ringförmigen Wände (4, 5) angelegt ist.

10. Element nach Anspruch 9, dadurch gekennzeichnet, daß die Scheibe (6) mit einem Schlitz (6′) versehen ist, der ihre Einführung in das Volumen erlaubt.

11. Modul (1′) zur Lagerung von Reservelängen von Übertragungsträgern auf einer Gruppe von Verbindungen (16), insbesondere mit Lichtleitfasern, und für den selektiven Zugang zu diesen Reservelängen, dadurch gekennzeichnet, daß er eine Gruppe von Elementen (1) nach einem der Ansprüche 3 bis 10 aufweist, die um eine gemeinsame Drehachse (D2) beweglich montiert sind.

12. Modul nach Anspruch 11, dadurch gekennzeichnet, daß er eine im wesentlichen parallelepipedische Form hat mit einer Vorderseite (15), einer Rückseite (13), einer Oberseite (24), einer Unterseite (14) und zwei Seitenflächen (11, 12), wobei die Drehachse (D2) von den Seitenflächen getragen wird.

13. Modul nach Anspruch 12, dadurch gekennzeichnet, daß die Verbindungen (16) zu den Lagerelementen durch die Rück-, Unter- und die Oberseite Zugang haben.

14. Modul nach Anspruch 13, dadurch gekennzeichnet, daß die Unterseite eine Gruppe von Sitzen (21) aufweist, die eine Gruppe von Trägern (35) von Halbverbindern (17, 19) für den Anschluß dieser Verbindungen (16) an andere Verbindungen (18) aufnehmen.

15. Modul nach Anspruch 14, dadurch gekennzeichnet, daß die Sitze (21) entlang der Seiten der Unterseite senkrecht zur Richtung der Wickelachse (D1) verteilt sind.

16. Endausstattung (1˝) für Kabel, insbesondere Lichtleiterkabel, die den Anschluß von Übertragungsträgern einer ersten Art (16), die aus den Elementarleitern, insbesondere Lichtleitfasern, bestehen, die diese Kabel bilden, an Übertragungsträger (18) einer zweiten Art gewährleistet, insbesondere optische Anschlußstrippen, wobei für jeden dieser Träger Reservelängen gebildet werden, dadurch gekennzeichnet, daß sie mindestens einen ersten Modul (10′) gemäß einem der Ansprüche 11 bis 15 zur Bildung von Reservelängen von Übertragungsträgern der ersten Art (16) und zum selektiven Zugang zu diesen Reservelängen, und mindestens einen zweiten Modul (11′) gemäß einem der Ansprüche 11 bis 15 zur Bildung von Reservelängen auf den Übertragungsträgern des zweiten Typs (18) und zum selektiven Zugang zu diesen Reservelängen aufweist.

## Claims

1. Storage element (1) for holding a reserve of transmission medium (16) of a link, especially an optical fibre link, and for allowing access to said reserve; said element including a storage volume for at least one turn of said medium; said volume being delimited by walls (2, 3, 4, 5) of two categories, namely a peripheral category (2, 3) and a lateral category (4, 5); each category in turn including two types of wall, namely inside (2) and outside (3) peripheral walls and righthand (5) and lefthand (4) lateral walls; at least two of said walls (2, 3, 4, 5) having interruptions; and the spacings between adjacent storage volume portions and/or the contours of uninterrupted wall portions (3, 4, 5) being determined to minimise mechanical stresses on said medium during winding or unwinding via said interruptions;
characterised in that, if all said walls have interruptions, two portions of walls of different categories which delimit a storage volume portion and the type of which alternates in each category from one storage volume portion to the next are always present simultaneously; each storage volume portion or alternate storage volume portions being also delimited by a third wall portion according to whether two or one of the four walls (2, 3, 4, 5) has no interruptions.

2. Element according to claim 1 characterised in that the contours of the peripheral wall portions (2, 3) are such that the lengths of the arcs formed by the intersections of these peripheral wall portions with the lateral wall portions (4, 5) present simultaneously are greater than the length of the arcs formed by the intersections of these peripheral wall portions with any plane orthogonal to the winding axis (D1) and intersecting said portions.

3. Element according to claim 1 or claim 2 characterised in that it is mobile about a rotation axis (D2) parallel to the winding axis (D1).

4. Element according to any one of claims 1 to 3 characterised in that said link (16) is, for at least one of its access points to said storage volume, disposed in a plane perpendicular to the winding axis and intersecting said volume.

5. Element according to claim 3 characterised in that said storage volume is fastened to a part (7) enabling it to rotate about said rotation axis (D2).

6. Element according to claim 5 characterised in that, said rotation axis being defined by a cylindrical rod (30), the part of said member (7) enabling rotation of said storage volume about said rotation axis has in a plane orthogonal to said axis a "V"-shape contour conferring upon said storage element two stable positions as it rotates about said axis.

7. Element according to any one of claims 1 to 6 characterised in that, said storage volume being formed by a hollow cylindrical ring delimited by a cylindrical outer peripheral wall (3), a cylindrical inner peripheral wall (2) and two plane annular side walls (4, 5), the inside peripheral wall (2) is uninterrupted and the outside peripheral wall (3) and the plane annular walls (4, 5) are interrupted so that alternate storage volumes are delimited, firstly, by the inner peripheral wall (2), by an outer peripheral wall portion (3) and by a lefthand or righthand lateral wall portion (4, 5), and, secondly, by the inside peripheral wall (2) and by a right or left lateral wall portion (4, 5).

8. Element according to claim 7 characterised in that the contour of the exterior peripheral wall portions (3) is trapezoidal in shape as seen from above.

9. Element according to claim 7 or claim 8 characterised in that it further includes a flexible washer (6) pressed against one plane annular wall (4, 5).

10. Element according to claim 9 characterised in that said washer (6) has a slit (6′) enabling it to be inserted into said volume.

11. Storage module (1′) for holding reserves of transmission media for a set of links (16), especially optical fibre links, and for allowing selective access to such reserves, characterised in that it comprises a set of elements (1) according to any one of claims 3 to 10 mobile about a common rotation axis (D2).

12. Module according to claim 11 characterised in that it is substantially parallelepiped-shape having a front (15), a rear (13), a top (24), a bottom (14) and two sides (11, 12), said rotation axis (D2) being supported by said sides.

13. Module according to claim 12 characterised in that said links (16) access said storage elements via said rear, bottom and top.

14. Module according to claim 13 characterised in that said bottom has a set of housings (21) adapted to receive a set of supports (35) of half-connectors (17, 19) for connecting said links (16) to other links (18).

15. Module according to claim 14 characterised in that said housings (21) are arranged on the sides of said bottom perpendicular to the winding axis (D1).

16. Cable terminal equipment (1˝), especially for optical cables, connecting transmission media of a first type (16), constituted by conductors, especially optical fibres, constituting said cables, to transmission media of a second type (18), especially optical jumpers, with reserves of each medium, characterised in that it includes at least one first module (10′) according to any one of claims 11 to 15 for holding reserves for the transmission media of the first type (16) and for allowing selective access to said reserves, and at least one second module (11′) according to any of claims 11 to 15 for holding reserves for the transmission media of the second type (18) and for allowing selective access to said reserves.
